Europäisches Patentamt

European Patent Office

Office européen des brevets

(11) Veröffentlichungsnummer: **0 475 018 A1**

# EUROPÄISCHE PATENTANMELDUNG

(21) Anmeldenummer: **91111896.6**

(22) Anmeldetag: **17.07.91**

(51) Int. Cl.5: **F02D  11/10**, B60K 26/04, F02D 9/02

(30) Priorität: **31.08.90 DE 4027578 U**

(43) Veröffentlichungstag der Anmeldung:
**18.03.92 Patentblatt  92/12**

(84) Benannte Vertragsstaaten:
**DE FR GB IT**

(71) Anmelder: **ROBERT BOSCH GmbH**
**Postfach 30 02 20**
**W-7000 Stuttgart 30(DE)**

(72) Erfinder: **Preis, Karl-Heinrich, Dipl.-Ing.**
**Breitmattstrasse 1**
**W-7582 Bühlertal(DE)**

Erfinder: **Lieberoth-Leden, Bernd, Dr. Dipl.-Ing.**
**Riegeläckerstrasse 49**
**W-7250 Leonberg 7(DE)**
Erfinder: **Spiegel, Günter, Dr. Dipl.-Ing.**
**Böcklinstrasse 1**
**W-6520 Worms(DE)**
Erfinder: **Reiling, Eckhard, Dipl.-Ing. (FH)**
**Pforzheimer Strasse 21**
**W-7539 Kämpfelbach(DE)**
Erfinder: **Jansen, Karlheinz, Dipl.-Ing.**
**Wehrpöhl 4**
**W-4190 Kleve-Griethausen(DE)**

(54) **Lastverstelleinrichtung, insbesondere für ein Fahrzeug.**

(57) Die Erfindung betrifft eine Lastverstelleinrichtung, insbesondere für ein Fahrzeug, mit einem Stellelement (204), dessen Lage die Leistung einer Antriebsmaschine bestimmt und das in Leerlaufstellrichtung von einer Rückstellfeder (205) beaufschlagt ist, wobei zumindest im Leerlaufbereich der Antriebsmaschine die Lage des Stellelements (204) mit Hilfe eines von einer Regeleinrichtung ansteuerbaren Stellantriebs (221) verstellbar ist, und wobei bei nicht aktiviertem Stellantrieb das Stellelement im Leerlaufbereich der Antriebsmaschine durch Anlage an einem entgegen der Leerlaufstellrichtung federbelasteten Anschlag (208) in einer bestimmten, einen erhöhten Leerlauf (ELL) bestimmenden Stellung gehalten ist.

Aufgabe der Erfindung ist, bei aktiviertem Stellantrieb die mit der im Leerlaufbereich zu überwindenden Federkraft der Feder des Anschlages zusammenhängenden Probleme zu vermeiden.

Diese Aufgabe wird erfindungsgemäß dadurch gelöst, daß bei aktiviertem Stellantrieb (221) der federbelastete Anschlag (208) durch ein Rückstellorgan (207) in einer gegen die Wirkung seiner Feder (210) zurückgezogenen, das Stellelement (204) in dessen gesamtem Stellbereich freigebenden Stellung gehalten wird.

In der bevorzugten Ausführungsform ist dieses Rückstellorgan (207) ein Elektromagnet.

Fig. 6

Die Erfindung betrifft eine Lastverstelleinrichtung, insbesondere für ein Fahrzeug, mit einem Stellelement, dessen Lage die Leistung einer Antriebsmaschine bestimmt und das in Leerlaufstellrichtung von einer Rückstellfeder beaufschlagt ist, wobei zumindest im Leerlaufbereich der Antriebsmaschine die Lage des Stellelements mit Hilfe eines von einer Regeleinrichtung ansteuerbaren Stellantriebs verstellbar ist, und wobei bei nicht aktiviertem Stellantrieb das Stellelement im Leerlaufbereich der Antriebsmaschine durch Anlage an einem entgegen der Leerlaufstellrichtung federbelasteten Anschlag in einer bestimmten, einen erhöhten Leerlauf bestimmenden Stellung gehalten ist.

Eine derartige Einrichtung ist bereits aus der DE-C-39 00 437 bekannt. Bei dieser bekannten, für ein von einer Brennkraftmaschine angetriebenes Fahrzeug bestimmten Lastverstelleinrichtung erfolgt in einem ersten Funktionszustand die Übertragung der Stellposition eines Bedienelements, wie eines Fahrpedals, auf die Stellposition des auf ein Stellglied in Form einer Drosselklappe oder Einspritzpumpe einwirkenden Stellelements über dessen gesamten Stellbereich auf elektromechanischem Weg über einen von einer elektronischen Regeleinrichtung ansteuerbaren elektrischen Stellantrieb. In diesem ersten, als der reguläre Funktionszustand der Lastverstelleinrichtung anzusehenden Funktionszustand ist es möglich, mittels der elektronischen Regeleinrichtung in die Übertragung der Stellposition des Fahrpedals auf die Stellposition des Stellelementes verändernd einzugreifen. Ein solcher Eingriff kann z.B. dazu dienen, insbesondere beim Anfahren einen Radschlupf infolge zu hoher Leistung zu vermeiden, die Fahrgeschwindigkeit und/oder die Drehzahl der Antriebsmaschine zu begrenzen und/oder die Fahrgeschwindigkeit auf einem bestimmten Wert zu halten. Andere automatische Eingriffe in die Lastverstelleinrichtung sind z.B. erforderlich, wenn ein Getriebe automatisch schalten soll, oder wenn die Leerlaufdrehzahl auch bei unterschiedlichen Leistungserfordernissen im Leerlauf auf einen konstanten Wert geregelt werden soll. Bei nicht aktiviertem elektrischen Stellantrieb infolge Ausfalls einer Systemkomponente des elektromechanischen Übertragungssystems wird in einem zweiten Funktionszustand die Verstellung des Stellelements von einem rein mechanischen Übertragungssystem übernommen. Dieser zweite Funktionszustand stellt einen Notbetrieb dar. Um in diesem Funktionszustand sicherzustellen, daß bei nicht betätigtem Fahrpedal unter allen denkbaren Umständen (insbesondere im Winterbetrieb bei kaltem Motor) die Antriebsmaschine in Gang gehalten wird, sorgt der entgegen der Leerlaufstellrichtung federbelastete Anschlag dafür, daß das Stellelement in der einen erhöhten Leerlauf bestimmenden Stellung gehalten wird.

Nachteilig ist hiebei allerdings, daß die der Rückstellfeder entgegenwirkende und kraftmäßig stärker als diese auszulegende Feder des Anschlages im regulären Funktionszustand bei der Regelung im Leerlaufbereich Probleme schafft. Soll nämlich das Stellelement durch den Stellantrieb über seine durch den federnden Anschlag bestimmte Stellung hinaus in Leerlaufstellrichtung betätigt werden, so muß der Stellantrieb plötzlich gegen die Feder des Anschlages arbeiten, während er vordem gegen die entgegengesetzt wirkende Rückstellfeder arbeiten mußte. Dies macht daher im Bereich der durch den Anschlag bestimmten Stellung des Stellelements sowohl eine Drehmomentumkehr als auch ein höheres Drehmoment erforderlich. In der Praxis hat sich auch gezeigt, daß es häufig zu Problemen mit dem Dauerhaltemoment des Elektromotors kommt, da wegen der Federkraft des Anschlages ein hoher Motorstrom erforderlich ist, die Wärmeabfuhr infolge des geringen Luftdurchsatzes aber nur gering ist. Anderseits ist die Motorgröße durch die Einbaubedingungen meist sehr beschränkt.

Aufgabe der Erfindung ist, diese Nachteile der bekannten Lastverstelleinrichtung zu beheben.

Diese Aufgabe wird erfindungsgemäß dadurch gelöst, daß bei aktiviertem Stellantrieb der federbelastete Anschlag durch ein Rückstellorgan in einer gegen die Wirkung seiner Feder zurückgezogenen, das Stellelement in dessen gesamtem Stellbereich freigebenden Stellung gehalten wird.

Die Erfindung ist nicht nur auf Lastverstelleinrichtungen mit mechanischem Notbetrieb anwendbar, sondern auch auf solche ohne eine derartige mechanische Redundanz. In diesem Fall soll bei Ausfall einer Systemkomponente des elektromechanischen Übertragungssystems der erhöhte Leerlauf ermöglichen, aus einer Gefahrenzone bzw. bis zur nächsten Werkstatt zu gelangen.

Desgleichen ist die Erfindung auf Lastverstelleinrichtungen anwendbar, bei denen bei sonst mechanischem Übertragungssystem der Stellantrieb zumindest im Leerlaufbereich eine Regelung vornimmt.

Das erfindungsgemäß vorgesehene Rückstellorgan für den Anschlag wirkt entweder direkt mit dem Anschlag oder mit einem mit diesem verbundenen Bauteil zusammen.

Vorteilhaft sind der federbelastete Anschlag und/oder das mit diesem verbundene Bauteil und das Rückstellorgan zu einer Baueinheit zusammengefaßt.

Handelt es sich bei dem Stellantrieb um einen elektrischen Stellantrieb, so ist das Rückstellorgan zweckmäßig ein elektrisch betätigtes Rückstellorgan.

In der bevorzugten Ausführungsform ist das elektrisch betätigte Rückstellorgan ein Elektromagnet. Dabei ist es zweckmäßig, wenn in der zurückgezogenen Stellung des Anschlages der magnetische Kreis zwischen dem Elektromagneten und dem Anschlag bzw. dem mit diesem verbundenen Teil kurzgeschlossen ist, da damit eine optimale Haltekraft bei minimaler Leistung der Spule des Elektromagneten erzielt wird.

Gemäß einer bevorzugten Ausführungsform der Erfindung ist (sind) der Anschlag und/oder der mit diesem verbundene Bauteil in einer Hülse verschiebbar geführt, die ihrerseits in einem ortsfesten Bauteil, z.B. in einem Drosselklappengehäuse, montiert ist und auch das Rückstellorgan aufnimmt. Vorteilhaft sind hiebei die Hülse in bezug auf den ortsfesten Bauteil und das Rückstellorgan in bezug auf die Hülse in Achsrichtung der Hülse einstellbar. Die Einstellbarkeit der Hülse in bezug auf das ortsfeste Bauteil erlaubt dann eine Einstellung des erhöhten Leerlaufs, während die Einstellbarkeit des Rückstellorgans in bezug auf die Hülse eine Einstellung des minimalen Leerlaufs bei aktiviertem Stellantrieb erlaubt. Die axiale Einstellbarkeit kann in einfacher Weise durch Schraubverbindungen zwischen der Hülse und dem ortsfesten Bauteil bzw. dem Rückstellorgan bewerkstelligt sein.

Die Feder des Anschlages ist zweckmäßig eine Druckfeder, insbesondere Schraubendruckfeder, die sich einerseits auf dem Anschlag und anderseits auf einem ringförmigen Vorsprung an der Innenseite der Hülse abstützt. Der ringförmige Vorsprung ist dabei vorteilhaft von einer in die Hülse eingesetzten Gleitbuchse gebildet, in der das mit dem Anschlag verbundene und mit dem Rückstellorgan zusammenwirkende Bauteil verschiebbar geführt ist.

Handelt es sich bei der Antriebsmaschine um einen Ottomotor, so kann zweckmäßig der Anschlag als Keilschieber ausgebildet sein, der bei seinem Vorwärtshub eine Verschwenkung des mit der Drosselklappenwelle verbundenen Stellelements bewirkt.

Bei gewissen Bauarten der Lastverstelleinrichtung kann ein relativ großer Verstellweg notwendig sein, um das Stellelement in die den erhöhten Leerlauf bestimmende Stellung zu führen. Da der mit dem Rückstellorgan zu bewirkende Hub zweckmäßig möglichst gering gehalten werden soll, ist in einem solchen Fall eine Hubverlängerung erforderlich. Auch können es die Einbaubedingungen notwendig machen, die Bewegungsrichtung des Anschlages an die Verstellrichtung des Stellelements anzupassen. In solchen Fällen kann in einfacher Weise der Anschlag mit dem mit dem Rückstellorgan zusammenwirkenden Bauteil über einen entsprechenden Hebel verbunden sein. Eine andere Möglichkeit besteht darin, einen entsprechenden Hebel zwischen dem Anschlag und dem Stellelement vorzusehen.

Ein nicht zum Stand der Technik zählender Vorschlag geht dahin, bei einer Lastverstelleinrichtung mit einem elektromechanischem Übertragungssystem für den regulären Betrieb und einem mechanischen Übertragungssystem für einen Notbetrieb zwischen dem Stellelement und dem elektrischen Stellantrieb eine Magnetkupplung vorzusehen, die bei nicht aktiviertem elektrischen Stellantrieb letzteren von dem Stellelement trennt. Für eine solche Lastverstelleinrichtung sieht die Erfindung eine Integration des bei aktiviertem elektrischen Stellantrieb zurückziehbaren Anschlages in die Magnetkupplung dahingehend vor, daß der Elektromagnet der Magnetkupplung zugleich das Rückstellorgan bildet.

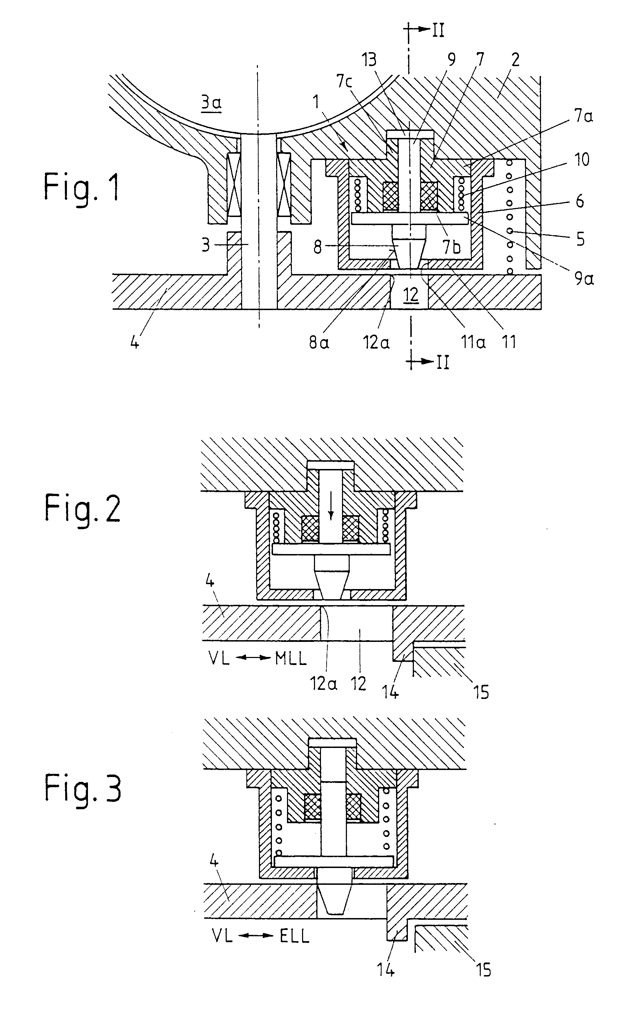

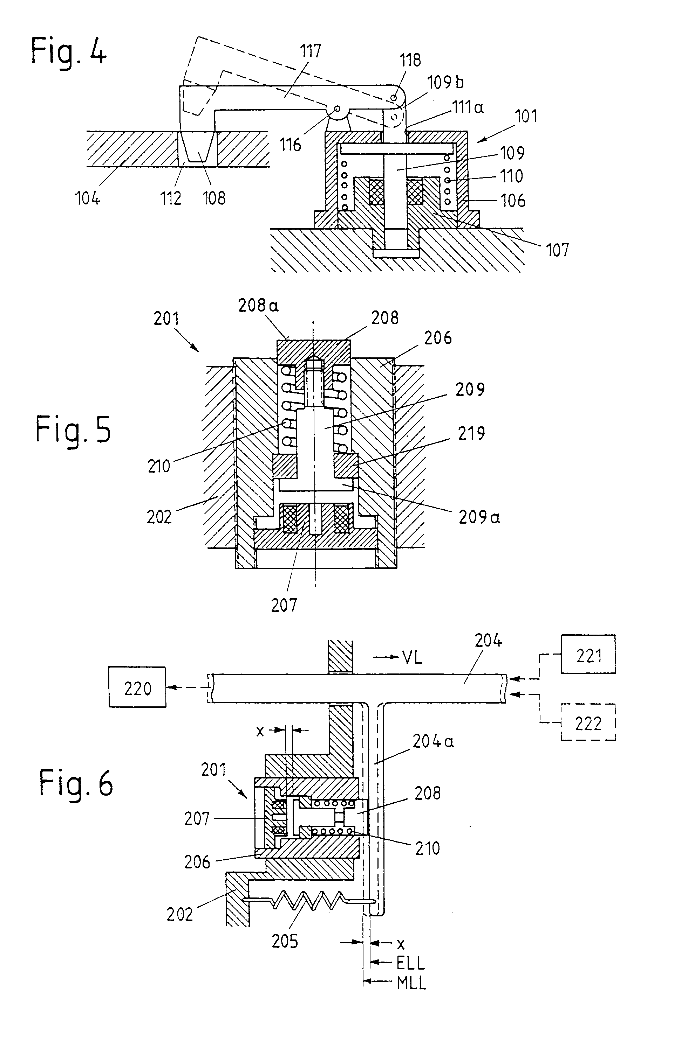

Nachstehend ist die Erfindung anhand der Zeichnung näher erläutert. Es zeigen: Fig. 1 einen Teilschnitt durch ein Drosselklappengehäuse mit einer darin integrierten, den zurückziehbaren Anschlag enthaltenden Baueinheit nach einer ersten Ausführungsform der Erfindung, Fig. 2 einen Schnitt nach der Linie II-II in Fig. 1 bei zurückgezogenem Anschlag, Fig. 3 einen der Fig. 2 entsprechenden Schnitt bei ausgefahrenem Anschlag, Fig. 4 im Schnitt eine Variante der Ausführungsform nach Fig. 1, bei der der Hub des Anschlages durch einen Hebel vergrößert ist, Fig. 5 einen Schnitt durch eine zweite Ausführungsform der den zurückziehbaren Anschlag enthaltenden Baueinheit, und Fig. 6 die Baueinheit nach Fig. 5 im Zusammenwirken mit einem linear verschiebbaren Stellelement.

Fig. 1 bezieht sich auf eine Lastverstelleinrichtung für einen Ottomotor, bei der die den zurückziehbaren Anschlag enthaltende Baueinheit 1 in das Drosselklappengehäuse 2 integriert ist. Mit 3 ist die in dem Drosselklappengehäuse 2 drehbar gelagerte Drosselklappenwelle bezeichnet, mit der ein Stellelement 4 drehfest verbunden ist, und mit 3a die Drosselklappe selbst. Eine einerseits am Drosselklappengehäuse 2 und anderseits am Stellelement angreifende, als Drehfeder ausgebildete Rückstellfeder 5 beaufschlagt das Stellelement 4 und damit über die Drosselklappenwelle 3 die Drosselklappe 3a in Leerlaufstellrichtung.

In einem ersten Funktionszustand der Lastverstelleinrichtung wird das Stellelement 4 beispielsweise von einem (nicht dargestellten) elektrischen Stellantrieb eines elektromechanischen Übertragungssystems verstellt, der von einer (nicht dargestellten) elektronischen Regeleinrichtung angesteuert wird, die ihrerseits der Stellposition des (nicht dargestellten) Fahrpedals entsprechende elektrische Signale erhält. In einem zweiten Funktionszustand der Lastverstelleinrichtung, der bei einem Ausfall des elektrischen Stellantriebs eintritt, wird das Stellelement 4 über ein (nicht dargestelltes) mechanisches Übertragungssystem zwischen Fahrpedal und Stellelement verstellt.

Während im ersten Funktionszustand der Lastverstelleinrichtung bei nicht betätigtem Fahrpedal eine das Inganghalten des Motors unter allen Betriebsbedingungen sicherstellende Drosselklappenstellung von der elektronischen Regeleinrichtung eingeregelt wird, würde mangels einer entsprechenden Vorkehrung im zweiten Funktionszustand der Lastverstelleinrichtung die Nichtbetätigung des Fahrpedals zur Minimal-Leerlaufstellung der Drosselklappe 3a führen, in der ein sicheres Inganghalten des Motors nicht mehr gewährleistet ist.

Zur Vermeidung einer solchen Minimal-Leerlaufstellung der Drosselklappe 3a im zweiten Funktionszustand dient nun die in das Drosselklappengehäuse 2 integrierte Baueinheit 1.

Diese Baueinheit 1 besteht aus einer äußeren Hülse 6, in deren oberen Teil ein als elektrisch betätigtes Rückstellorgan dienender ringförmiger Elektromagnet 7 eingesetzt ist. Innerhalb des Elektromagneten 7 ist ein den zurückziehbaren Anschlag 8 tragendes Bauteil 9 verschiebbar gelagert. Zwischen einem mit dem Elektromagneten 7 zusammenwirkenden Ringflansch 9a des den Anschlag 8 tragenden Bauteils 9 und einem Ringflansch 7a des Elektromagneten 7 ist eine Schraubendruckfeder 10 angeordnet, die bei nicht erregter Spule 7b des Elektromagneten 7 das Bauteil 9 nach unten in Anlage an eine ringförmige Bodenwand 11 der Hülse 6 drückt, wobei der Anschlag 8 durch die Öffnung 11a dieser Bodenwand 11 hindurchtritt. Der Anschlag 8 weist an seinem Ende eine kegelstumpfförmige Wirkfläche 8a auf und wirkt als sogenannter Keilschieber mit dem oberen Rand 12a einer in dem Stellelement 4 vorgesehenen Öffnung 12 zusammen. Diese Öffnung 12 verläuft in Achsrichtung der Drosselklappenwelle 3 gesehen entlang eines auf die Achse letzterer zentrierten Kreisbogens.

Die gesamte Baueinheit 1 ist mit Hilfe eines rohrförmigen Ansatzes 7c in einer entsprechenden Aufnahme 13 des Drosselklappengehäuses 2, z.B. durch eine Schraubverbindung, festgelegt.

In dem ersten Funktionszustand der Lastverstelleinrichtung, d.h. bei aktiviertem elektrischen Stellantrieb ist auch die Spule 7b des Elektromagneten 7 bestromt, sodaß das Bauteil 9 samt dem Anschlag 8 entgegen der Wirkung der Druckfeder 10 zurückgezogen ist, wie es in den Fig. 1 und 2 gezeigt ist. In Fig. 2 befindet sich das Stellelement 4 in seiner der Minimal-Leerlaufstellung der Drosselklappe 3a entsprechenden Stellung, in der ein stellelementseitiger Anschlag 14 an einem ortsfesten, zweckmäßig drosselklappengehäuseseitigen Anschlag 15 anliegt.

In dieser zurückgezogenen Stellung des Anschlages 8 ist das Stellelement 4 durch den elektrischen Stellantrieb zwischen Vollast VL und minimalem Leerlauf MLL verstellbar.

Bei einem Ausfall des elektrischen Stellantriebs wird auch die Spule 7b des Elektromagneten 7 stromlos, sodaß die Druckfeder 10 das Bauteil 9 mit dem Anschlag 8 nach unten drückt. Befindet sich das Stellelement 4 in diesem Moment in seiner dem minimalen Leerlauf MLL entsprechenden Stellung, wie sie in Fig. 2 gezeigt ist, greift die kegelstumpfförmige Wirkfläche 8a des Anschlages 8 an dem oberen Rand 12a der Öffnung 12 des Stellelements 4 an und verschiebt letzteres in eine einem erhöhten Leerlauf ELL entsprechende Stellung, wie sie in Fig. 3 gezeigt ist. Befindet sich hingegen das Stellelement 4 im Augenblick des Ausfalls des elektrischen Stellantriebs in einer Stellung zwischen diesem erhöhten Leerlauf ELL und Vollast VL, dringt der Anschlag 8 ohne Wirkung auf das Stellglied 4 in die Öffnung 12 ein und begrenzt erst in der Folge die Verschwenkung des Stellelements in Leerlaufstellrichtung.

Bei der in Fig. 4 gezeigten Baueinheit 101, die eine Variante der Ausführungsform nach Fig. 1 darstellt, wird der zurückziehbare Anschlag 108 von dem längeren Arm eines an der äußeren Hülse 106 bei 116 schwenkbar gelagerten zweiarmigen Hebels 117 getragen, dessen kürzerer Arm bei 118 mit einem durch die Öffnung 111a der äußeren Hülse 106 herausragenden Fortsatz 109b des mit dem Elektromagneten 107 zusammenwirkenden Bauteils 109 schwenkbar verbunden ist. Bei dieser Variante wird durch den Hebel 117 der Hub des Anschlages 108 nicht nur gegenüber jenem des Bauteils 109 verlängert, sondern auch umgekehrt. In Fig. 4 ist im Gegensatz zu Fig. 1 der Anschlag 108 von seiner Feder 110, beaufschlagt und befindet sich daher in seiner in die Öffnung 112 des Stellelements 104 eingefahrenen Stellung. Die zurückgezogene Stellung des Anschlages 108 ist in strichlierten Linien angedeutet.

Anstelle eines Hebels ist hier selbstverständlich auch ein aus zwei oder mehreren Hebeln bestehendes Hebelsystem einsetzbar, um je nach den Einbaubedingungen den Hubweg und/oder die Hubrichtung des Anschlages anzupassen. Ebenso ist es denkbar, zwischen dem Anschlag und dem Stellelement einen oder mehrere Hebel vorzusehen.

Fig. 5 zeigt eine zweite Ausführungsform der den zurückziehbaren Anschlag enthaltenden Baueinheit. Diese Baueinheit 201 besteht aus einer in ein ortsfestes Bauteil 202 einzuschraubenden äußeren Hülse 206, in der der zurückziehbare Anschlag 208 verschiebbar geführt ist. Der Anschlag 208, dessen Wirkfläche 208a von einer ebenen Stirnfläche gebildet ist, wird von einem Bauteil 209 getragen, das seinerseits in einer in die Hülse 206 eingesetzten und einen inneren Vorsprung letzterer bildenden Gleitbuchse 219 verschiebbar ist. Zwischen dem Anschlag 208 und der Gleitbuchse 219 ist eine Schraubendruckfeder 210 angeordnet, die den Anschlag 208 samt dem Bauteil 209 in die von einem an der Gleitbuchse 219 anliegenden Ringflansch 209a des Bauteils 209 bestimmte ausgefahrene Stellung drückt. Diesem Ringflansch 209a gegenüber liegt ein in die Hülse 206 eingeschraubter Elektromagnet 207, durch den im bestromten Zustand desselben das Bauteil 209 samt dem Anschlag 208 gegen die Wirkung der Druckfeder 210 zurückgezogen wird. Bei dieser Baueinheit 201 ist es dadurch, daß die Wirkfläche 208a des Anschlages 208 sowohl in der ausgefahrenen als auch in der zurückgezogenen Stellung des Anschlages über die Hülse 206 vorsteht, möglich, sowohl den gewünschten erhöhten Leerlauf als auch den gewünschten minimalen Leerlauf einzustellen, wie später noch anhand der Fig. 6 erläutert werden wird.

Fig. 6 zeigt die Baueinheit 201 im Zusammenwirken mit einem linear verschiebbaren Stellelement 204, das auf ein die Leistung einer (nicht gezeigten) Antriebsmaschine bestimmendes Stellglied 220 wirkt, das z.B. die Drosselklappe eines Ottomotors, die Regelstange einer Einspritzpumpe eines Dieselmotors oder auch der Stellhebel einer elektrischen Antriebsmaschine sein kann. Beaufschlagt wird das Stellelement 204 von dem elektrischen Stellantrieb eines elektromechanischen Übertragungssystems 221 und - bei Ausfall dieses - gegebenenfalls von einem einen Notbetrieb ermöglichenden mechanischen Übertragungssystem 222.

Wie ersichtlich, wirkt der Anschlag 208, der auch hier in seiner ausgefahrenen Stellung gezeigt ist, die er bei infolge eines Ausfalls des elektromechanischen Übertragungssystems nicht aktiviertem elektrischen Stellantrieb einnimmt, auf einen Arm 204a des Stellelements 204, das von einer zwischen dem ortsfesten Bauteil 202 und dem Arm 204a eingesetzten, als Zugfeder ausgebildeten Rückstellfeder 205 in Leerlaufstellrichtung beaufschlagt ist.

Bei funktionierendem elektromechanischen Übertragungssystem 221, d.h. bei aktiviertem elektrischen Stellantrieb, ist der Elektromagnet 207 bestromt, sodaß der Anschlag 208 um die Distanz x zurückgezogen ist und das Stellelement 204 zwischen seiner den minimalem Leerlauf MLL bestimmenden Stellung (strichliert dargestellt) und seiner die Vollast LL bestimmenden Stellung verstellbar ist. Fällt das elektromechanische Übertragungssystem 221 aus, sodaß der elektrische Stellantrieb nicht aktiviert ist, wird auch der Elektromagnet 207 stromlos und der Anschlag 208 nimmt unter der Wirkung der Feder 210 die dargestellte ausgefahrene Stellung ein, in der er die Bewegung des Stellelements 204 in Leerlaufstellrichtung nur bis in eine den erhöhten Leerlauf ELL bestimmende Stellung zuläßt.

Dieser erhöhte Leerlauf wird bei Vorhandensein des einen Notbetrieb ermöglichenden mechanischen Übertragungssystems 222 so gewählt, daß ein Ingnghalten der Antriebsmaschine unter allen möglichen Betriebsbedingungen gewährleistet ist. Ist ein solches mechanisches Übertragungssystem nicht vorhanden, wird dieser erhöhte Leerlauf so hoch gewählt, daß es möglich ist, z.B. im zweiten Gang, einen Gefahrenbereich zu verlassen bzw. die nächste Werkstatt aufzusuchen.

Der erhöhte Leerlauf kann in einfacher Weise durch entsprechendes axiales Einstellen der äußeren Hülse 206 in bezug auf das ortsfeste Bauteil 202 anhand der diese beiden Teile verbindenden Schraubverbindung erfolgen. Die Schraubverbindung zwischen der äußeren Hülse 206 und dem Elektromagneten 207 erlaubt hingegen ein Einstellen des minimalen Leerlaufs.

Es versteht sich, daß der in Fig. 6 gezeigte Anschlag 208 anstelle der ebenen Wirkfläche auch eine Keilfläche aufweisen könnte, um eine Verschwenkung eines Stellelements bewirken zu können. Desweiteren muß das Rückstellorgan nicht unbedingt als Elektromagnet ausgebildet sein, sondern könnte z.B. auch von einem Linearmotor, einem Kurbelantrieb mit Drehsteller, einem Getriebemotor, einem Hydraulik- oder Pneumatikzylinder u.s.w. gebildet sein. Ein Rückstellorgan in Form eines Elektromagneten wird allerdings als am zweckmäßigsten angesehen, da damit, wenn dafür gesorgt ist, daß in der zurückgezogenen Stellung des Anschlages der magnetische Kreis zwischen dem Elektromagneten und dem Anschlag bzw. dem mit diesem verbundenen Bauteil kurzgeschlossen ist, eine optimale Haltekraft bei minimalem Energieverbrauch erhalten wird. Im übrigen ist derzeit eine Lastverstelleinrichtung in Entwicklung, bei der zwischen dem Stellelement und dem elektrischen Stellantrieb eine Magnetkupplung vorgesehen ist, durch die das Stellelement im unbestromten Zustand des elektrischen Stellantriebs von letzterem getrennt wird. Hier bietet sich die Möglichkeit an, den Elektromagneten der Magnetkupplung gleichzeitig als Rückstellorgan für den Anschlag zu verwenden. Ferner kann die Feder des Anschlages statt als Schraubendruckfeder selbstverständlich auch als Tellerfeder, Zugfeder, Wellfeder od. dgl. ausgebildet sein. Desweiteren sind auch Konstruktionen denkbar, bei denen das Rückstellorgan nicht auf ein mit dem Anschlag verbundenes Bauteil, sondern direkt auf den Anschlag wirkt. Schließlich ist die Erfindung auch auf Lastverstelleinrichtungen anwendbar, bei denen die Übertragung mechanisch erfolgt und ein elektrischer Stellantrieb nur in gewissen Situationen, zumindest aber im Leerlaufbereich regelnd eingreift.

## Patentansprüche

1. Lastverstelleinrichtung, insbesondere für ein Fahrzeug, mit einem Stellelement, dessen Lage die Leistung einer Antriebsmaschine bestimmt und das in Leerlaufstellrichtung von einer Rückstellfeder beaufschlagt ist, wobei zumindest im Leerlaufbereich der Antriebsmaschine die Lage des Stellelements mit Hilfe eines von einer Regeleinrichtung ansteuerbaren Stellantriebs verstellbar ist, und wobei bei nicht aktiviertem Stellantrieb das Stellelement im Leerlaufbereich der Antriebsmaschine durch Anlage an einem entgegen der Leerlaufstellrichtung federbelasteten Anschlag in einer bestimmten, einen erhöhten Leerlauf bestimmenden Stellung gehalten ist, dadurch gekennzeichnet, daß bei aktiviertem Stellantrieb der federbelastete Anschlag (8;108;208) durch ein Rückstellorgan (7;107;207) in einer gegen die Wirkung seiner Feder (10;110;210) zurückgezogenen, das Stellelement (4;104;204) in dessen gesamtem Stellbereich freigebenden Stellung gehalten wird.

2. Lastverstelleinrichtung nach Anspruch 1, dadurch gekennzeichnet, daß das Rückstellorgan (7;107;207) entweder direkt mit dem Anschlag (8;108;208) oder mit einem mit diesem verbundenen Bauteil (9;109;209) zusammenwirkt.

3. Lastverstelleinrichtung nach Anspruch 1 oder 2, dadurch gekennzeichnet, daß der federbelastete Anschlag (8;108;208) und/oder das mit diesem verbundene Bauteil (9;109;209) und das Rückstellorgan (7;107;207) zu einer Baueinheit (1; 101;201) zusammengefaßt sind.

4. Lastverstelleinrichtung nach einem der Ansprüche 1 bis 3, mit elektrischem Stellantrieb, gekennzeichnet durch ein elektrisch betätigtes Rückstellorgan (7;107;207).

5. Lastverstelleinrichtung nach Anspruch 4, dadurch gekennzeichnet, daß das elektrisch betätigte Rückstellorgan (7;107;207) ein Elektromagnet ist.

6. Lastverstelleinrichtung nach Anspruch 5, dadurch gekennzeichnet, daß in der zurückgezogenen Stellung des Anschlages (8;108;208) der magnetische Kreis zwischen dem Elektromagneten (7;107;207) und dem Anschlag bzw. dem mit diesem verbundenen Bauteil (9;109,209) kurzgeschlossen ist.

7. Lastverstelleinrichtung nach einem der Ansprüche 2 bis 6, dadurch gekennzeichnet, daß der Anschlag (208) und/oder das mit diesem verbundene Bauteil (209) in einer Hülse (206) verschiebbar geführt ist (sind), die ihrerseits in einem ortsfesten Bauteil (202), z.B. in einem Drosselklappengehäuse, montiert ist und auch das Rückstellorgan (207) aufnimmt.

8. Lastverstelleinrichtung nach Anspruch 7, dadurch gekennzeichnet, daß die Hülse (206)) in bezug auf das ortsfeste Bauteil (202) und das Rückstellorgan (207) in bezug auf die Hülse (206) in Achsrichtung der Hülse einstellbar sind.

9. Lastverstelleinrichtung nach Anspruch 8, dadurch gekennzeichnet, daß die axiale Einstellbarkeit durch Schraubverbindungen zwischen der Hülse (206) und dem ortsfesten Bauteil (202) bzw. dem Rückstellorgan (207) bewerkstelligt ist.

10. Lastverstelleinrichtung nach einem der Ansprüche 7 bis 9, dadurch gekennzeichnet, daß die Feder (210) des Anschlages (208) eine Druckfeder, insbesondere Schraubendruckfeder ist, die sich einerseits auf dem Anschlag und anderseits auf einem ringförmigen Vorsprung (219) an der Innenseite der Hülse (206) abstützt.

11. Lastverstelleinrichtung nach Anspruch 10, dadurch gekennzeichnet, daß der ringförmige Vorsprung (219) von einer in die Hülse eingesetzten Gleitbuchse gebildet ist, in der das mit dem Anschlag (208) verbundene und mit dem Rückstellorgan (207) zusammenwirkende Bauteil (209) verschiebbar geführt ist.

12. Lastverstelleinrichtung nach einem der Ansprüche 1 bis 11, dadurch gekennzeichnet, daß der Anschlag (8;108) als Keilschieber ausgebildet ist, der bei seinem Vorwärtshub eine Verschwenkung des mit der Welle (3) einer Drosselklappe verbundenen Stellelements (4;104) bewirkt.

13. Lastverstelleinrichtung nach einem der Ansprüche 2 bis 12, dadurch gekennzeichnet, daß der Anschlag (108) mit dem mit dem Rückstellorgan (107) zusammenwirkenden Bauteil (109) über einen Hebel (117) verbunden ist.

14. Lastverstelleinrichtung nach einem der Ansprüche 1 bis 13, dadurch gekennzeichnet, daß zwischen dem Anschlag und dem Stellelement ein Hebel vorgesehen ist.

15. Lastverstelleinrichtung nach einem der Ansprüche 4 bis 6 und 12 bis 14, dadurch gekennzeichnet, daß zwischen dem Stellelement und dem elektrischen Stellantrieb eine Magnetkupplung vorgesehen ist, die bei nicht aktivertem elektrischen Stellantrieb letzteren von dem Stellelement trennt und deren Elektromagnet zugleich das Rückstellorgan bildet.

Fig. 1

Fig. 2

Fig. 3

Fig. 4

Fig. 5

Fig. 6

**Europäisches Patentamt**

**EUROPÄISCHER RECHERCHENBERICHT**

Nummer der Anmeldung

**EP 91 11 1896**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,A | EP-A-0 412 237 (AUDI AG)<br>* Spalte 2, Zeile 30 - Spalte 6, Zeile 34; Abbildungen * *<br>– – – | 1 | F 02 D 11/10<br>B 60 K 26/04<br>F 02 D 9/02 |
| A | WO-A-8 802 064 (ROBERT BOSCH GMBH)<br>* Seite 4, Absatz 3 - Seite 6; Abbildungen * *<br>– – – | 1 | |
| A | EP-A-0 378 737 (VDO ADOLF SCHINDLING AG)<br>* Spalte 6, Zeile 8 - Spalte 11, Zeile 16; Abbildungen * *<br>– – – | 1 | |
| P,A | EP-A-0 389 649 (AUDI AG)<br>* Spalte 1, Zeile 40 - Spalte 5, Zeile 27; Abbildung * *<br>– – – | 1 | |
| A | EP-A-0 369 061 (VDO ADOLF SCHINDLING AG)<br>* Spalte 5, Zeile 37 - Spalte 12, Zeile 3; Abbildungen * *<br>– – – – – | 1 | |

**RECHERCHIERTE SACHGEBIETE (Int. Cl.5)**

F 02 D
B 60 K

**Der vorliegende Recherchenbericht wurde für alle Patentansprüche erstellt**

| Recherchenort | Abschlußdatum der Recherche | Prüfer |
|---|---|---|
| Den Haag | 03 Dezember 91 | MOUTON J.M.M.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument